# EUROPEAN PATENT SPECIFICATION

(11) **EP 3 384 155 B1**
(45) Date of publication and mention of the grant of the patent: **07.07.2021**
(21) Application number: 16826160.0
(22) Date of filing: 23.11.2016
(51) Int. Cl.: F03D 9/00, F03D 9/11, F03D 3/04

(54) **UNIT FOR SOLAR AND WIND ENERGY UTILISATION**
EINHEIT FÜR SOLAR- UND WINDENERGIENUTZUNG
UNITÉ POUR UTILISATION D'ÉNERGIE SOLAIRE ET ÉOLIENNE

(30) Priority: 24.11.2015 PL 41492115
(43) Date of publication of application: 10.10.2018
(73) Proprietor: Piskorz, Waldemar, 21-509 Koden (PL); Piskorz, Tomasz Tadeusz, 21-509 Koden (PL); Piskorz, Ireneusz, 21-509 Koden (PL)
(72) Inventor: Piskorz, Waldemar, 21-509 Koden (PL); Piskorz, Tomasz Tadeusz, 21-509 Koden (PL); Piskorz, Ireneusz, 21-509 Koden (PL)
(86) International application number: PCT/IB2016/057054
(87) International publication number: WO 2017/089965

(56) References cited:
- EP-A2- 1 626 176
- US-A1- 2008 047 270
- US-A1- 2010 045 039
- US-A1- 2011 089 698

## Description

The subject of the invention is an unit for solar and wind energy utilisation, especially for power generation.

A wind turbine is known from document DE 102010008337, with construction and guide vanes covered with lacquer or with film with photovoltaic cells.

Wind turbine is also known from the Polish application P.411022, having a stationary housing with guide vanes and at least one wind guide, comprising comprises two rectangular wings fixed to a mounted shaft, connected to drive system, connected to control system.

A multisegment wind turbine is known from application WO2008121024, coupled rotors of which are connected to shaft on which a there is a generator connected to the power grid installed.

US 2011/089698 A1, US 2008/047270 A1 and EP 1 626 176 A2 disclose other prior art units for solar and wind energy utilisation.

US 2010/045039 A1 discloses a further prior art wind turbine.

According to the invention a unit for solar and wind energy utilisation according to claim 1 is provided. According to the invention there is a first electric motor mounted on the main shaft of the column with wind turbines. The generator, mounted on a shaft, is connected through a first relay and an inverter with a power grid, and the above mentioned generator is connected, through a rectifier with a pack of batteries. Four rotary guides, connected with second electric motors designed for rotating the mentioned rotary guides, are covered with film with phtovoltaic solar cells.

Power outlet of photovoltaic cells on guides and photovoltaic cells on outer surfaces of wind turbines is electrically connected by a third relay with the first electric motor or by fourth relay with the inverter and further with an electric grid. On the top of the column there is a first wind sensor of wind speed and direction installed, and the second sensor following the sun, both connected electrically with a control system. The first relay, third relay, fourth relay and second motors of rotary guides are also connected to the control system.

The pack of batteries is electrically connected through the second relay and a converter with the power grid and with second electrical motors, where the second relay is connected electrically with the control system.

There are fairings covered with film with photovoltaic cells between the wind turbines.

The unit provides a continuous supply of electricity, especially for individual households or enterprises. In the case of absence of required wind speed or cloudness, the recipient can use electricity stored in the pack of batteries.

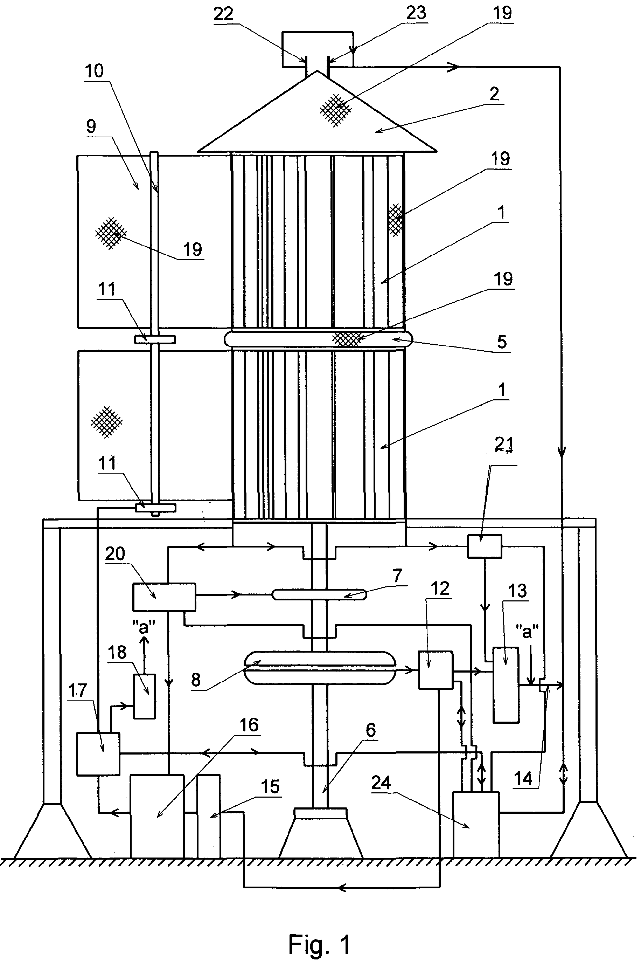

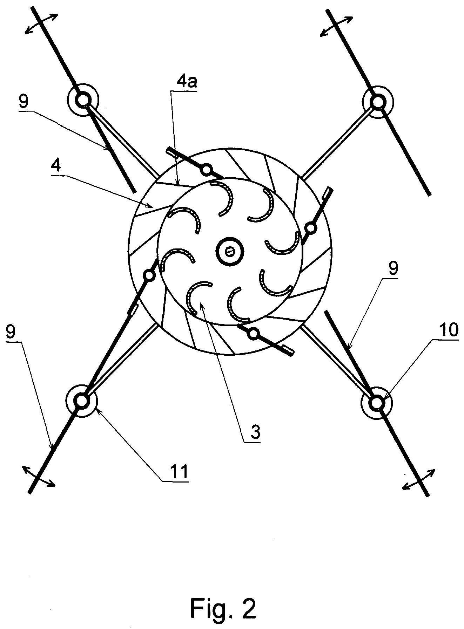

The subject matter of the invention is illustrated in the exemplary embodiment in drawings, where Figure 1 shows the column with one guide and the block diagram of electrical connections, and Figure 2 shows the cross-section of the unit with four guides.

The unit for wind and solar energy utilisation consists of two vertical axis wind turbines **1** covered with a roof **2.** The wind turbine **1** is assembled with a rotor **3** and casing **4,** said casing having guide vanes **4a.** Between the wind turbines **1** there are fairings **5.** On the shaft **6** of a column there is a first electric motor **7** and generator **8.** Around the column there are rotary guides **9,** masts **10** of said guides **9** are connected with second electric motors **11.** Power outlet of the generator **8** is connected through the first relay **12** and inverter **13** with power grid **14,** and is also connected via rectifier **15** with the battery pack **16,** outlet of which is connected through a second relay **17** and converter **18** with the power grid **14,** and with the second electric motors **11.** The guide vanes **4a,** roof **2,** fairings **5** as well as rotary guides **9** are covered with foil **19** with photovoltaic cells wherein the guide vanes **4a** are covered with foil 19 with photovoltaic cells on both sides. Power outlet of photovoltaic cells is connected through third relay **20** with the first electric motor **7,** and with battery pack **16,** and the outlet of photovoltaic cells is connected through fourth relay **21** and inverter **13** with the power grid **14.** Relays **12, 17, 20** and **21,** as well as a wind speed and direction sensor **22** and following sensor **23** are connected with the control system **24.**

The first electric motor **7** is designed to start the wind turbines **1,** and in case of strong wind there is a possibility to set it in such a way, so that it fulfills the functions of the generator. If the wind blows with proper speed, one guide **9** is set in the position, in which the wind pushes on its largest surface, and the three other guides **9** are set perpendicularly, in one plane, to the angle of the rays of sun. In case of lack of wind with proper speed, and good insolation, all rotary guides **9** are set towards the sun, and are the main source of power to the power grid **14.** At the same time, if the generator **8** or photovoltaic cells generate electric current, the control system **24** provides total and constant charge of the battery pack **16.**

## Claims

1. A Unit for solar and wind energy utilisation, having a column with vertical axis wind turbines (1) covered with foil with photovoltaic cells, also having a generator (8) mounted on the main shaft (6) of the column and rotary guides (9), whereby on the shaft **(6)** of the column there is a first electric motor **(7)** installed, wherein the generator **(8)** is connected through a first relay **(12)** and an inverter **(13)** with a power grid **(14),** and the generator **(8)** is connected through a rectifier **(15)** to a battery pack **(16),** and the rotary guides (9), connected with second motors **(11)** are covered with a layer **(19)** with photovoltaic cells, and the power outlet of mentioned photovoltaic cells and of the photovoltaic cells on the wind turbines **(1)** is connected electrically through a third relay **(20)** with the first electric motor **(7)** or through a fourth relay **(21)** with the inverter **(13)** and further with the power grid **(14),** and the column is also equipped with a first wind speed and direction sensor **(22)** and a second sensor **(23)** following the sun, connected electrically with a control system **(24),** coupled with the first relay **(12),** third relay **(20),** fourth relay **(21)** and second motors **(11)** of the rotary guides **(9).**

2. The unit according to claim 1 **characterised in that** the battery pack **(16)** is connected electrically through a second relay **(17)** and a converter **(18)** with the power grid **(14)** and with the second electric motors **(11),** wherein the second relay **(17)** is connected electrically with the control system **(24).**

3. The unit according to claim 1 **characterised in that** between the wind turbines there is a fairing **(5),** covered with the layer **(19)** with photovoltaic cells.

## Patentansprüche

1. Solar- und Windkraftanlage mit einer Säule mit Windturbinen (1) mit vertikaler Drehachse, die mit photovoltaischen Zellen beschichtet sind, und mit einem Generator (8), der mit der Hauptwelle (6) der Säule verbunden ist, sowie mit drehbaren Führungen (9), infolge dessen auf der Welle **(6)** der Säule der Generator **(8)** und der erste Motor **(7)** montiert sind, wobei der Generator **(8)** über das erste Relais **(12)** und über den Wandler **(13)** mit dem Stromnetz **(14)** verbunden ist; der Generator ist auch **(8)** über einen Gleichrichter **(15)** mit der Batteriebank **(6)** verbunden, darüber hinaus sind die drehbaren Führungen **(9),** die mit weiteren Motoren **(11)** verbunden sind, mit photovoltaischen Zellen beschichtet **(19)** und der Stromausgang aus diesen photovoltaischen Zellen und aus den photovoltaischen Zellen auf Windturbinen **(1)** ist elektrisch über das dritte Relais **(20)** mit dem ersten Elektromotor **(7)** oder über das vierte Relais **(21)** mit dem Wandler **(13)** und weiter mit dem Stromnetz **(14)** verbunden, darüber hinaus ist die Säule mit dem ersten Sensor **(22)** für die Windgeschwindigkeit und -richtung und mit dem zweiten Sensor **(23)** für die Nachführung ausgestattet, der elektrisch an das Steuersystem **(24)** angeschlossen ist, mit dem auch das erste Relais **(12),** das dritte Relais **(20),** das vierte Relais **(21)** und die weiteren Motoren **(11)** für die drehbaren Führungen **(9)** gekoppelt sind.

2. Das Aggregat nach dem Anspruch 1 ist **dadurch gekennzeichnet, dass** die Batteriebank **(16)** elektrisch über das zweite Relais **(17)** und über einen Umformer **(18)** mit dem Stromnetz **(14)** und mit weiteren Elektromotoren **(11)** verbunden ist, wobei das zweite Relais **(17)** elektrisch mit dem Steuersystem **(24)** verbunden ist.

3. Das Aggregat nach dem Anspruch 1 ist **dadurch gekennzeichnet, dass** sich zwischen den Windturbinen **(1)** eine Verkleidung **(5)** befindet, die mit photovoltaischen Zellen beschichtet **(19)** ist.

## Revendications

1. Un groupe utilisant l'énergie solaire et éolienne, muni d'une colonne d'éoliennes (1) à un axe de rotation vertical, recouvert d'un revêtement de cellules photovoltaïques, muni également d'un générateur (8) relié à l'arbre (6) principal de la colonne, et des ventilateurs (9) rotatifs, en conséquence de quoi le générateur **(8)** et le premier moteur **(7)** sont installés sur l'arbre **(6)** de la colonne, le générateur **(8)** étant relié par le biais du premier relais **(12)** et l'onduleur **(13)** au réseau **(14)** électrique, et le même générateur **(8)** étant relié par le biais du redresseur **(15)** à la batterie d'accumulateurs **(16)** ; en outre, les ventilateurs **(9)** rotatifs, reliés aux seconds moteurs (**11**), sont couverts d'un revêtement **(19)** de cellules photovoltaïques et la sortie de courant produit par ces cellules photovoltaïques et les cellules photovoltaïques installées sur les éoliennes **(1)** est reliée électriquement par le biais du troisième relais **(20)** au premier moteur **(7)** électrique ou par le biais du quatrième relais **(21)** à l'onduleur **(13)** et ensuite au réseau **(14)** électrique; en outre, la colonne est munie du premier capteur **(22)** de vitesse et de direction du vent et du second capteur **(23)** d'asservissement, reliés électriquement au système **(24)** de commande auquel le premier relais (**12**), le troisième relais **(20),** le quatrième relais **(21)** et les seconds moteurs (**11**) des ventilateurs **(9)** rotatifs sont également connectés.

2. Groupe selon la revendication 1, **caractérisé en ce que** la batterie d'accumulateurs **(16)** est reliée électriquement par le biais du second relais **(17)** et le convertisseur **(18)** au réseau **(14)** électrique et aux seconds moteurs électriques (**11**), le second relais **(17)** étant relié électriquement au système **(24)** de commande.

3. Groupe selon la revendication 1, **caractérisé en ce qu'**un déflecteur **(5)** recouvert d'un revêtement **(19)** de cellules photovoltaïques se trouve entre les éoliennes **(1).**
